# EUROPEAN PATENT APPLICATION

(11) **EP 2 604 147 A1**
(43) Date of publication of application: **19.06.2013**
(21) Application number: 12197312.7
(22) Date of filing: 14.12.2012
(51) Int. Cl.: A47C 7/70, A47B 9/00

(54) **SELF-LEVELING APPARATUS**

(30) Priority: 14.12.2011 SG 201109455
(71) Applicant: Singapore Technologies Aerospace Ltd, Singapore 539938 (SG)
(72) Inventor: Hsi, Han Lin, 277606 Singapore (SG)
(74) Representative: Probert, Gareth David

(57) **Abstract**

A self-leveling apparatus, a tray table for use with a seat comprising such an apparatus, and a method of maintaining a horizontal level of a mounting member are provided. The self-leveling apparatus comprises: a gear train rotatable about a fixed reference point, the gear train comprising a first gear fixedly mounted to the reference point; a rotatable last gear; and an odd number of rotatable intermediate gears meshing between the first gear and the last gear; and a mounting member adapted to be coupled the last gear, the mounting member having a surface capable of being positioned horizontally; wherein the last gear is further adapted to rotate locally about its axis an equal and opposite amount to a system rotation by the gear train about the reference point, thereby maintaining the surface horizontal.

## Description

### TECHNICAL FIELD

The present invention relates broadly to a self-leveling apparatus, to a tray table for use with a seat comprising such an apparatus, and to a method of maintaining a horizontal level of a mounting member.

### BACKGROUND

Aircraft and road/rail vehicle seats are sometimes equipped with tray tables which can be folded or hidden when not in use for safety reasons and to save space, and opened for use e.g. during meals or and other forms of activities like writing and working with a laptop computer. Conventional tray tables, such as one found on some passenger aircraft, typically have a fixed opened position. However, when switching between different activities, a user may find that uncomfortable. In addition, when an adjacent passenger needs to pass by, the tray table must be folded, which requires any items placed on the tray table to be firstly removed. This may cause particular inconvenience, e.g. if the user is in the middle of a meal.

There have been several approaches to solving the above problems. In some existing designs, the tray tables can swivel and/or slide about a horizontal plane once they are deployed in the opened position. The swiveling may be effected by a pivot about a vertical axis, while the sliding may be effected by guide slots. However, in these designs, the height of the tray tables is normally not adjustable. In addition, except for front-row seats, swiveling about the vertical axis based on these designs is usually limited or not practical, e.g. where the space between the passenger and the back of the next seat is restricted.

In other existing designs where both the horizontal and vertical positions of the tray tables are adjustable while maintaining the tray table essentially horizontal, complicated mechanisms are typically used. For example, US Patent No. 5597199 and US Patent Publication No 2006/0061149 describe tray tables having linkage arms or levers joined by hinges. However, such tray tables are usually flimsy due to the cantilever effect, and are thus not suitable for load-bearing. Moreover, there can be some difficulty in locking the linkages at a position chosen by the user. Also, the mechanisms may be difficult to assemble and/or maintain, and more expensive due to the high part count.

A need therefore exists to provide a self-leveling apparatus and a tray table that seeks to address or reduce at least some of the above problems.

### SUMMARY

In accordance with a first aspect of the present invention, there is provided a self-leveling apparatus comprising:
a gear train rotatable about a fixed reference point, the gear train comprising:
   a first gear fixedly mounted to the reference point;
   a rotatable last gear; and
   an odd number of rotatable intermediate gears meshing between the first gear and the last gear; and
a mounting member adapted to be coupled the last gear, the mounting member having a surface capable of being positioned horizontally;
wherein the last gear is further adapted to rotate locally about its axis an equal and opposite amount to a system rotation by the gear train about the reference point, thereby maintaining the surface horizontal.

The last gear and the first gear may be of the same first size.

The intermediate gears may be of the same second size.

The first and the second sizes may be equal.

The axes of the first, intermediate and last gears may be in a straight line through the reference point.

The mounting member may be rotationally fixed with respect to the axis of the last gear.

In accordance with a second aspect of the present invention, there is provided a tray table for a seat, the tray table including a self-leveling apparatus as defined in the first aspect.

The tray table may further comprise a table top coupled to the mounting member of the self-leveling apparatus.

The first gear of the self-leveling apparatus may be fixed to an armrest adjacent to the seat.

The table top may be adapted to be retractable to an opening disposed on the armrest.

The table top may be further adapted to be rotatable about a vertical axis.

In accordance with a third aspect of the present invention, there is provided a method for maintaining a horizontal level of a mounting member, the method comprising:
coupling the member at the horizontal level to a rotatable last gear of a gear train, the gear train being rotatable about a fixed reference point;
meshing an odd number of rotatable intermediate gears between the last gear and a first gear;
fixedly mounting the first gear to the reference point; and
locally rotating the last gear about its axis an equal and opposite amount to a system rotation by the gear train about the reference point.

### BRIEF DESCRIPTION OF THE DRAWINGS

Embodiments of the invention will be better understood and readily apparent to one of ordinary skill in the art from the following written description, by way of example only, and in conjunction with the drawings, in which:
Figure 1 shows a schematic diagram illustrating a mechanism underlying embodiments of the invention.
Figures 2a-2c show example configurations of the gears in the mechanism of Figure 1.
Figures 3a-3b show alternate views of a self-leveling apparatus at a highest position according to an example embodiment.
Figures 4a-4b show alternate views of the self-leveling apparatus of Figure 3 at an intermediate position.
Figure 5a-5b show alternate views of the self-leveling apparatus of Figure 3 at a lowest position.
Figure 6 shows an exploded view of the self-leveling apparatus of Figure 3.
Figure 7a-7f show images illustrating an example implementation of the self-leveling apparatus of Figure 3 in a tray table.
Figure 8 shows a flow chart illustrating a method for maintaining a horizontal level of an object according to an example embodiment.

### DETAILED DESCRIPTION

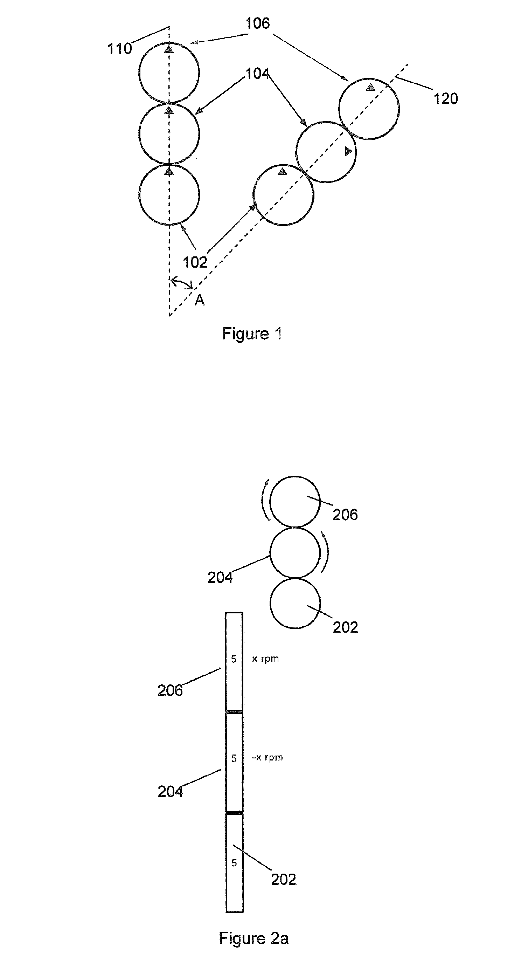

Figure 1 shows a schematic diagram illustrating a mechanism underlying embodiments of the invention. In Figure 1, a linear gear train 100 comprising three spur gears 102, 104, 106 of the same size is provided, in which the second gear 104 engages both the first gear 102 and the third gear 106. The first gear 102 at one end of the gear train 100 is stationary, while the second and third gears 104 and 106 are movable. A marker, as represented by a small triangle, is provided on each of the gears 102, 104, 106.

As can be seen from Figure 1, in a first position, the markers are aligned along a vertical reference line 110 that runs through the centers of the gears 102, 104, 106. When the gear train 100 is rotated, e.g. clockwise, from this position to a second position, where an intermediate line 120 through the centers of the gears 102, 104, 106 forms an angle A with the reference line 110, the third gear 106 is effectively not rotated. In other words, the orientation of the third gear 106 remains unchanged with respect to the reference line 110. This is because the clockwise rotation of the gear train 100 about the angle A (i.e. system rotation) is completely compensated by an equal anticlockwise rotation of the third gear 106 (i.e. local rotation) as it is driven by the second gear 104. As a result, if a component or member, e.g. a table top, is fixedly mounted with respect to the third gear, the component can maintain the same orientation with respect to the reference line 110. For example, if the table top is horizontal, it will remain horizontal even when the gear train 100 is rotated through different angles.

This self-leveling effect can be achieved on the conditions that the total number of gears in the gear train 100 is an odd number equal to or greater than 3, and that the first gear (which is fixed) and the last gear (which may have a table top mounted thereto) have an equal size. In other words, the number of intermediate gears between the first gear and the last gear is an odd number equal to or greater than 1. The odd number of gears helps to ensure that the last gear always rotates in opposite direction to the system rotation. The equal gear size helps to ensure that the amount of rotation by the last gear is equal to the system rotation. It should be noted that the intermediate gear(s) need not be of the same diameter as the first and last gears, as long as the gear pitch matches that of the first and last gears.

Figure 2a shows an example embodiment of the mechanism of Figure 1. Here, gears 202, 204, 206 are arranged in a straight line formation and have the same size, similar to those shown in Figure 1. As illustrated in Figure 2a, the local rotation by the gear 206 is equal and opposite to that of the gear 204. The gear 202 is stationary. This arrangement may be relatively easy to fabricate and assemble, as only one type of gear is required. If the mechanism requires a greater length, the number of gears may be increased, provided that an odd number of such gears are used.

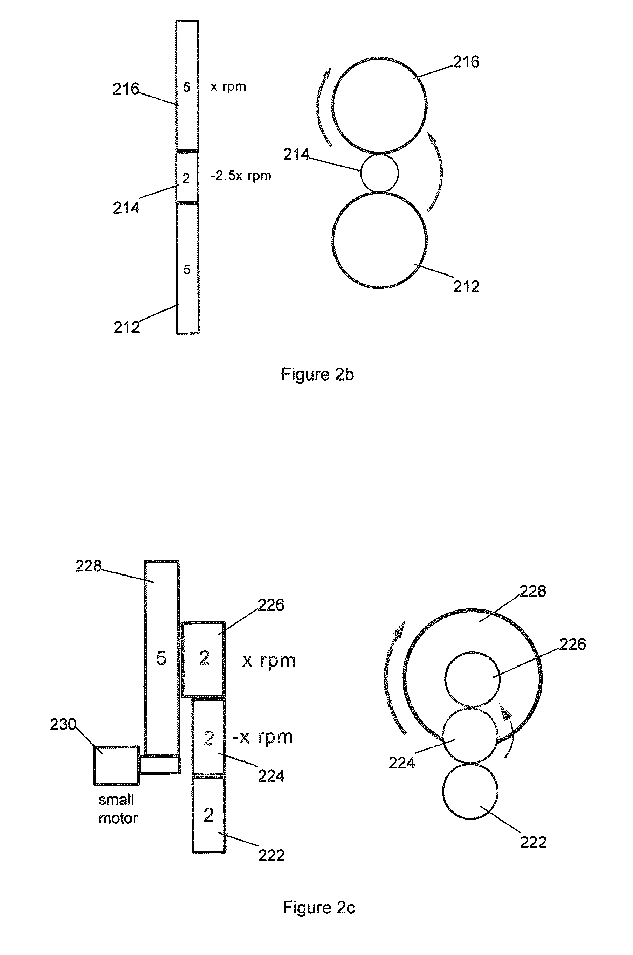

Figure 2b shows another example embodiment of the mechanism of Figure 1, illustrating another arrangement. Here, gears 212 and 216 have the same size, while gear 214, which meshes with both the gears 212 and 216, has a different size (e.g. smaller). Thus, the local rotation by the gear 214 is proportionally more than that by the gear 216. The gear212 is stationary.

Figure 2c shows another example embodiment of the mechanism of Figure 1, illustrating another arrangement. Here, gears 222, 224 and 226 have the same size, and the first gear 222 is stationary (similar to the example in Figure 2a). In addition, the last gear 226 is axially affixed to a larger gear 228, which is driven by a low-torque motor 230. This staggered configuration allows the gear train to be driven by the low-torque motor 230 (which can be small and inexpensive), while maintaining a short gear train. Moreover, such staggering can be useful in situations where the gear size cannot get smaller due to one reason or another (e.g. off-the-shelf parts, specific range of material strength, etc).

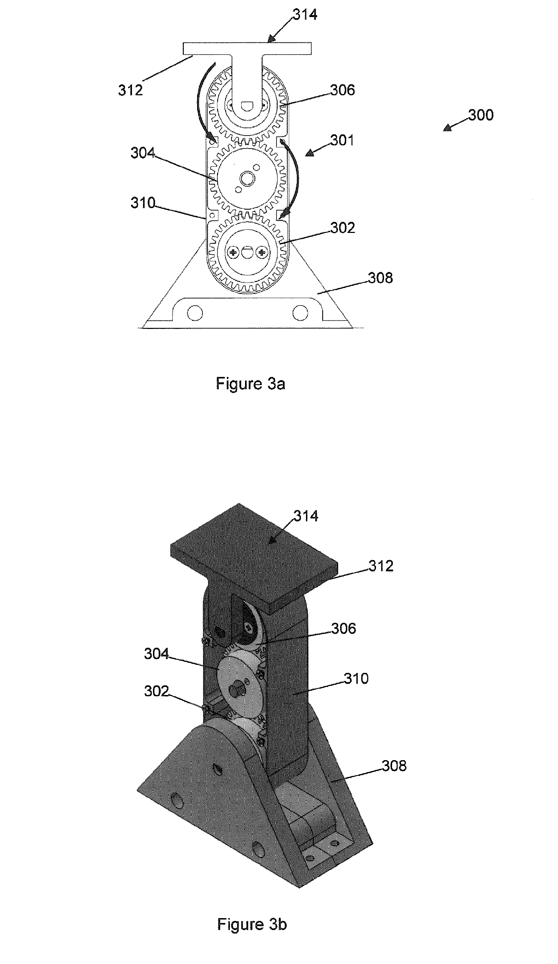

Figure 3a shows a side view of a self-leveling apparatus 300 at its highest position according to an example embodiment. Figure 3b shows a perspective view of the self-leveling apparatus 300 shown in Figure 3a. The self-leveling apparatus 300 makes use of the mechanism described above with respect to Figure 1 to maintain an artificial datum on a moving part, such that the moving part can maintain its level regardless of its position, by referencing to a real datum (a fixed point) by means of a gear train.

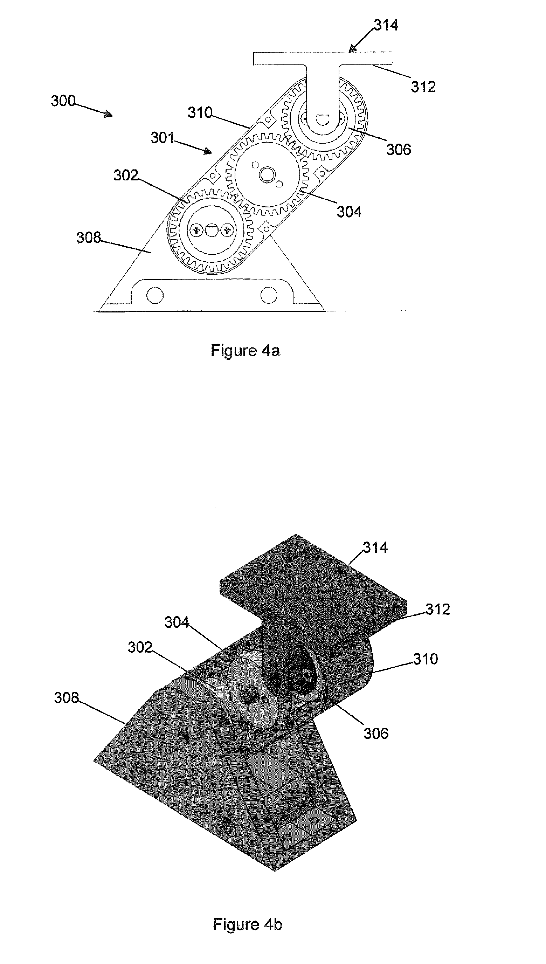

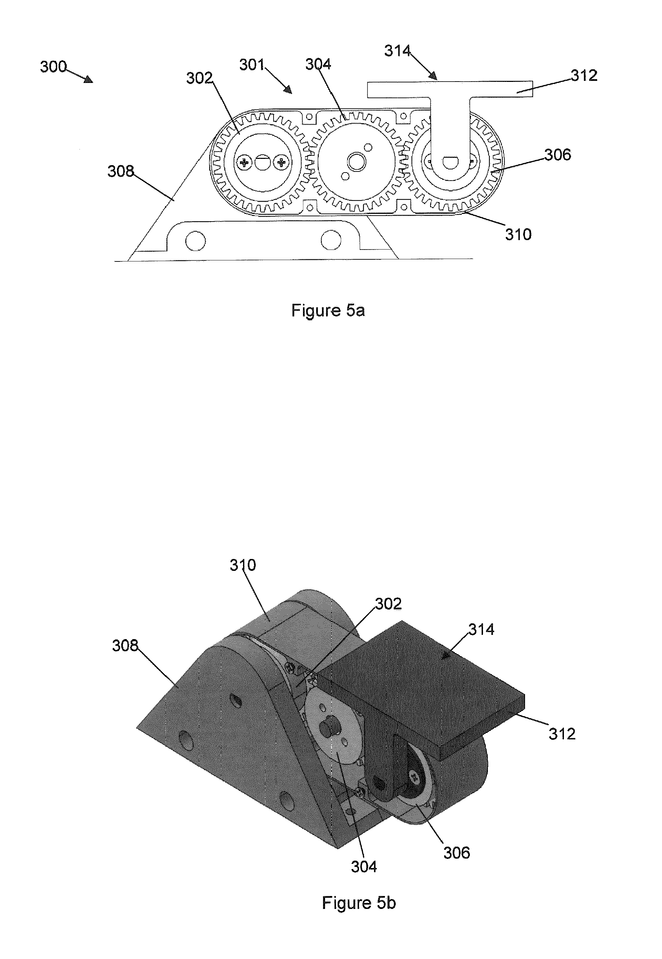

In the example embodiment shown in Figure 3, the self-levelling apparatus 300 comprises a gear train 301, similar to the gear train 100 in Figure 1, disposed in a housing 310. One end of the gear train 301 is fixedly mounted to a fixed support 308, e.g. via a first gear 302, such that while the housing 310 and gears 304, 306 are rotatable relative to the support 308 about a pivot 320, the first gear 302 is stationary relative to the support 308. A mounting member or holder 312 is fixedly mounted to the other end of the gear train 301, e.g. via the last gear 306. The holder 312 comprises a flat surface 314, which can be a table top, or to which a table top can be mounted. In some example practical implementations of the self-levelling apparatus 300, the flat surface 314 is initially horizontal, as shown in Figures 3a. As a result of the rotation compensation as described above with respect to Figure 1, the flat surface 314 remains horizontal even when the housing 310 is rotated together with the gear train 301 (to be discussed in further detail in Figures 4 and 5).

Figure 4a shows a side view of the self-leveling apparatus 300 of Figure 3a at an intermediate position. Figure 4b shows a perspective view of the self-leveling apparatus 300 shown in Figure 4a. At this position, the position of holder 312 is lower compared to that in Figure 3. For example, if the system rotation by housing 310 is e.g. 45° clockwise from the position shown in Figure 3, the net rotation by the gear 304 is [45° (system rotation) + 45° (local rotation)] = 90°. The net rotation by the last gear 306 is [45° (system rotation) - 45° (local rotation)] = 0°, as discussed above with respect to Figure 4a. It will be appreciated that if the size of the gear 304 is different from that of the gears 302, 306, the net rotation by the gear 304 in the above example will be changed. For example, if the gear 304 is smaller, its net rotation will be more than 90°. The net rotation by the gear 306 is zero, thus the holder 312 remains horizontal at this intermediate position.

Figure 5a shows a side view of the self-leveling apparatus 300 of Figure 3a at a lowest position. Figure 5b shows a perspective view of the self-leveling apparatus 300 shown in Figure 5a. At this position, one side of the housing 310 abuts the support 308, thereby preventing the housing 310 from further clockwise rotation. The net rotation by the last gear 306 is still zero, thus keeping the holder 312 horizontal.

From Figures 3-5, it can be noted that the bottom half of the first gear 302 does not contact with the intermediate gear 304 in this example implementation, as the gear train 300 can only rotate half a round about the pivot. In other examples, the gear train 300 may rotate a greater or smaller amount. Thus, the first gear 302 need not be a full gear, but can modified accordingly to e.g. only half a gear (top half), depending on the actual usage. This may help to reduce the weight of the overall system.

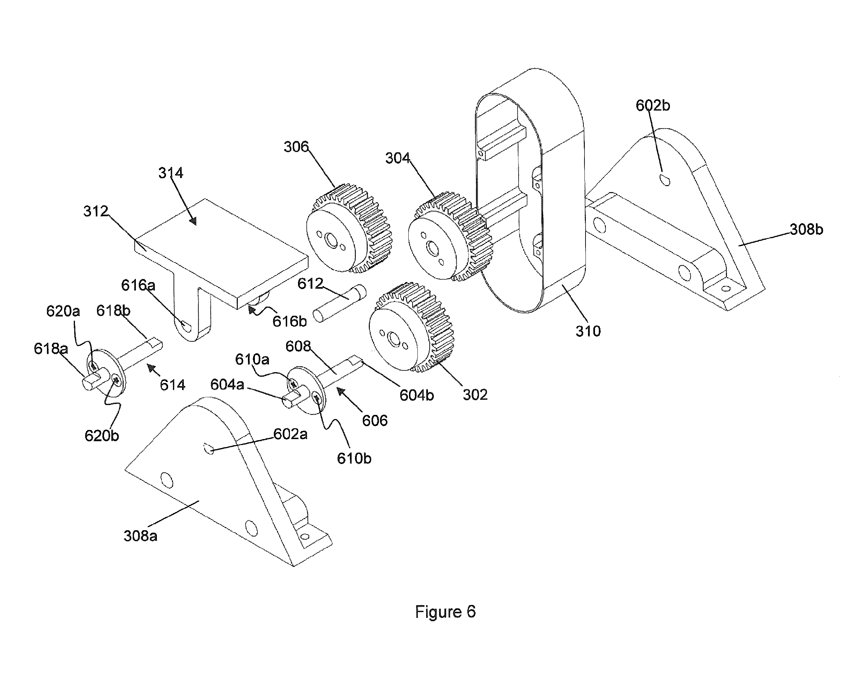

Figure 6 shows an exploded view of the self-leveling apparatus of Figure 3. As can be seen in Figure 6, the support 308 (Figure 3) is formed by support members 308a, 308b, each of which comprises a slot 602a, 602b configured to receive a corresponding end portion 604a, 604b of a pin 606. The pin 606 has a cylindrical middle portion 608, while the end portions 604a, 604b are non-symmetrical to prevent rotation by the pin 606 and the gear 302 about the support 308. Fastening means, in the forms of screws 610a, 610b, are provided to secure the gear 302. The gear 304 pivots about a pin 612, while the gear 306 pivots about a pin 614, which is similar to the pin 606. The holder 312 comprises non-symmetrical slots 616a, 616b for receiving corresponding ends 618a, 618b of the key 614. Screws 620a, 620b are provided to secure the mounting member or holder 312 relative to the gear 306.

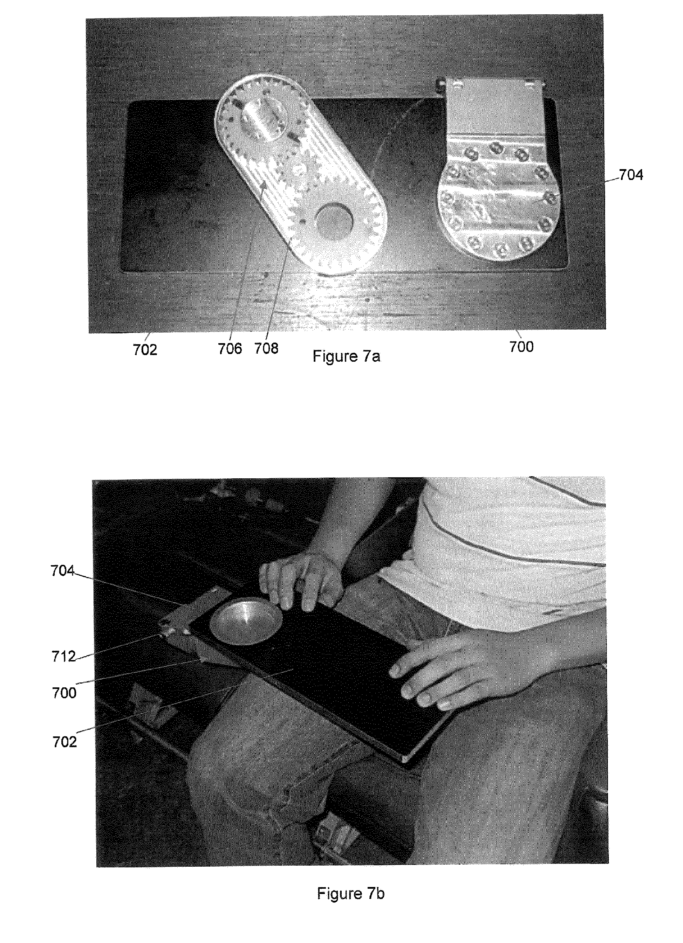

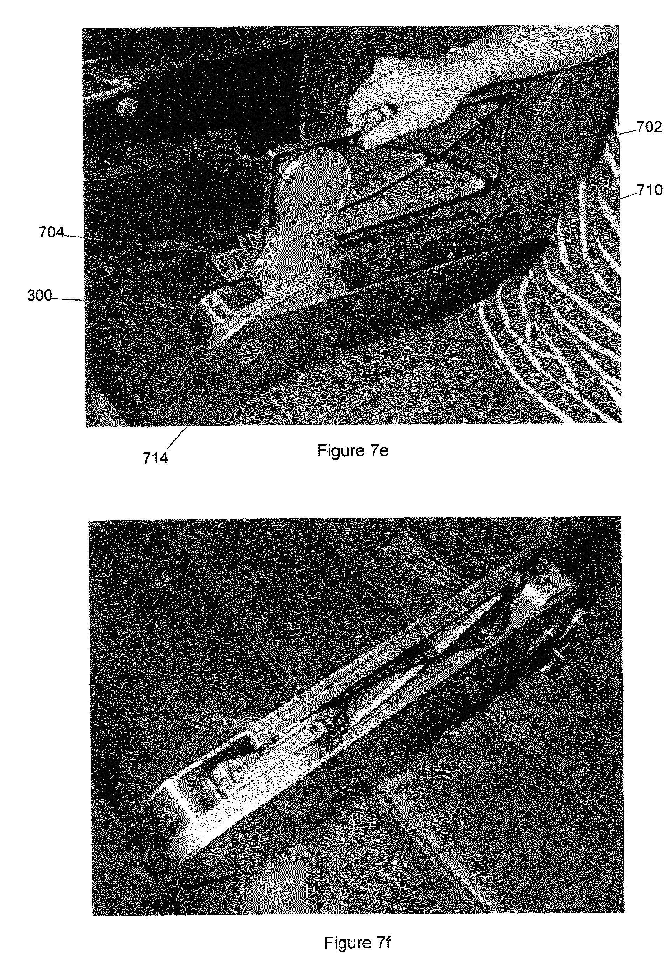

Figure 7a-7f show images illustrating an example implementation of the self-leveling apparatus 300 of Figure 3 in a tray table 700. Figure 7a shows a table top 702, a support arm 704 for supporting the table top 702, and the apparatus 300 comprising a gear train 706 inside a housing 708. In this example, the table top 702 can be made from a light-weight material such as wood, plastic or composite. The support arm 704 and housing 708 are made from aluminium, while the gear train 706 is fabricated from a durable material such as stainless steel. However, it will be appreciated that other materials with suitable mechanical properties may be used for these parts.

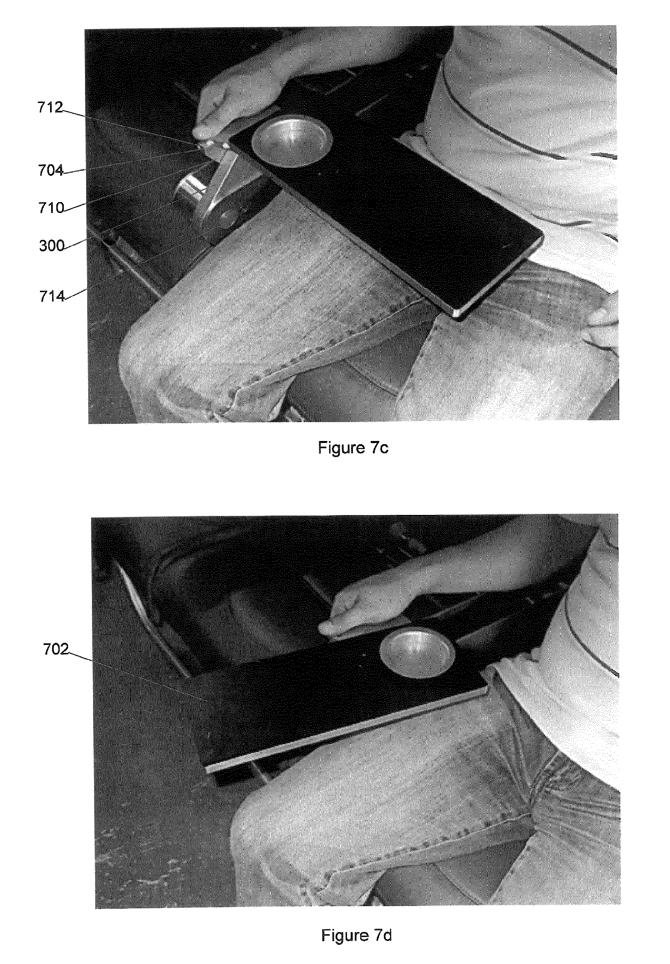

Figure 7b shows the tray table 700 in a deployed position that is relatively away from a user (e.g. a passenger in an airplane), while Figure 7c shows the table tray table 700 in a deployed position that is more withdrawn toward the user. The position shown in Figure 7b may be suitable for activities such as working with a laptop computer, eating, etc., while the position shown in Figure 7c can be useful when an adjacent passenger needs to move across. Items that are placed on the table top 702 in Figure 7b need not be removed when shifting to the position in Figure 7c. A lock and release mechanism (not shown) may be provided to secure the tray table 700 in the respective positions.

As can be more clearly shown in Figure 7c, the support arm 704 is rotatably mounted to a holder 710 of the apparatus 300, e.g. by way of a hinge 712. Thus, the support arm 704, together with the table top 702, can rotate relative to the holder 710. The apparatus 300 is mounted to a pivot 714 which can be disposed on an armrest 716 of the seat.

Figure 7d shows the tray table 700 in the withdrawn position in Figure 7c after it has been swiveled about 90 degrees about a vertical axis. This can be useful when the user needs to get out of the seat, without having to remove the items placed on the table top 702.

Figures 7e-7f show the tray table 700 as it is being stowed away. For example, the apparatus 300 is lowered to its lowest position (see Figures 5a-5b) where the table top 702 is rotated about the hinge 712, such that the table top 702 can be retracted into an opening 718 on an armrest 716. This example implementation thus allows the tray table 700 to be conveniently stowed when it is not required.

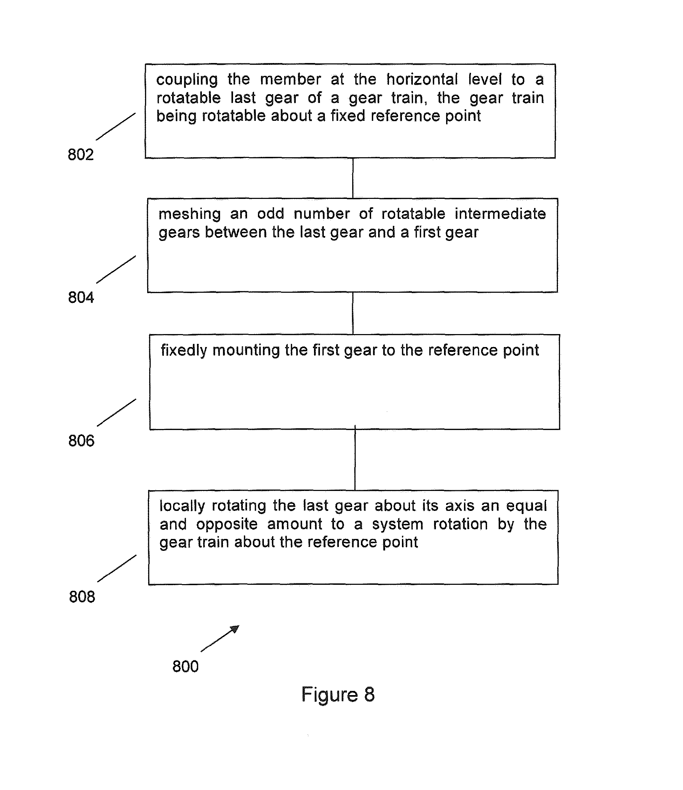

Figure 8 shows a flow chart 800 illustrating a method for maintaining a horizontal level of a mounting member according to an example embodiment. At step 802, the member is coupled at the horizontal level to a rotatable last gear of a gear train, the gear train being rotatable about a fixed reference point. At step 804, an odd number of rotatable intermediate gears are meshed between the last gear and a first gear. At step 806, the first gear is fixedly mounted to the reference point.

At step 808, the last gear is locally rotated about its axis an equal and opposite amount to a system rotation by the gear train about the reference point.

It will be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

## Claims

1. A self-leveling apparatus comprising:
a gear train rotatable about a fixed reference point, the gear train comprising:
a first gear fixedly mounted to the reference point;
a rotatable last gear; and
an odd number of rotatable intermediate gears meshing between the first gear and the last gear; and
a mounting member adapted to be coupled the last gear, the mounting member having a surface capable of being positioned horizontally;
wherein the last gear is further adapted to rotate locally about its axis an equal and opposite amount to a system rotation by the gear train about the reference point, thereby maintaining the surface horizontal.

2. The apparatus as claimed in claim 1, wherein the last gear and the first gear are the same first size.

3. The apparatus as claimed in claim 2, wherein the intermediate gears are the same second size.

4. The apparatus as claimed in claim 3, wherein the first and the second sizes are equal.

5. The apparatus as claimed in any one of the preceding claims, wherein the axes of the first, intermediate and last gears are in a straight line through the reference point.

6. The apparatus as claimed in any one of the preceding claims, wherein the mounting member is rotationally fixed with respect to the axis of the last gear.

7. A tray table for a seat, the tray table including a self-leveling apparatus as claimed in any one of claims 1 to 6.

8. The tray table as claimed in claim 7, further comprising a table top coupled to the mounting member of the self-leveling apparatus.

9. The tray table as claimed in claim 7 or 8, wherein the first gear of the self-leveling apparatus is fixed to an armrest adjacent to the seat.

10. The tray table as claimed in claim 9, wherein the table top is adapted to be retractable to an opening disposed on the armrest.

11. The tray table as claimed in any one of claims 7 to 10, wherein the table top is further adapted to be rotatable about a vertical axis.

12. A method for maintaining a horizontal level of a mounting member, the method comprising:
coupling the member at the horizontal level to a rotatable last gear of a gear train, the gear train being rotatable about a fixed reference point;
meshing an odd number of rotatable intermediate gears between the last gear and a first gear;
fixedly mounting the first gear to the reference point; and
locally rotating the last gear about its axis an equal and opposite amount to a system rotation by the gear train about the reference point.
